# EUROPEAN PATENT APPLICATION

(11) **EP 1 811 492 A1**
(43) Date of publication of application: **25.07.2007**
(21) Application number: 06124937.1
(22) Date of filing: 28.11.2006
(51) Int. Cl.: G09G 3/36

(54) **Active matrix display device**

(30) Priority: 23.01.2006 EP 06100716
(71) Applicant: TPO Hong Kong Holding Limited, Shatin, Hong Kong (CN)
(72) Inventor: Novoselov, Pavel, 6411 NK, Heerlen (NL)
(74) Representative: Hutter, Jacobus Johannes

(57) **Abstract**

A display (100) comprising a display area (105) where the pixels are arranged in a first sub-matrix (120) and a second sub-matrix (130) positioned adjacent to each other. The sub-matrices (120, 130) have respective individual gate drivers (125, 135) and a common source driver (140). Each column of pixels in the first sub-matrix is interconnected with a corresponding column ofpixels in the second sub-matrix, and the source lines (146, 147) share a single date output of the common source driver (140).

## Description

The present invention relates to a display, and more specifically to a novel architecture for the display area of the display.

Typically, active matrix liquid crystal devices (AMLCDs) find wide usage in portable electronic devices such as notebook computers, PDAs, pocket personal computers, mobile phones, automotive display LCD monitors, high definition televisions (HDTVs) and the likes.

A conventional AMLCD panel includes a matrix of liquid crystal picture elements formed with thin film transistors (TFTs) on a substrate and is described in Morozumi et al., "Black and White and Color Liquid Crystal Video Displays Addressed by Polysilicon TFTs", SID-83 Digest, pp. 316-319. A monocrystalline silicon MOS integrated gate line driver circuit for driving a plurality of gate lines and a source line driver circuit for driving a plurality of orthogonal source lines are formed on a common substrate. An active matrix panel includes a matrix of liquid crystal picture elements at the crossover of respective gate lines and source lines and a plurality of electrical connection pads. Driving circuits are electrically coupled to the AMLCD panel. The integrated driver circuits are electrically coupled to other circuitry.

The gate driver can be located outside the substrate or it may be integrated on the substrate, either in a-Si or Low Temperature Poly Silicon (LTPS) type active matrix displays. Moreover, it is desirable to have a relatively small source driver circuit with a limited number of outputs.

This can be achieved through a source multiplexer, which acts as a switch between an output and two or more source lines. This source multiplexer should be integrated on the common substrate to allow the desired size reduction of the source driver IC.

However, it is troublesome to manufacture a source multiplexer in a-Si technology. Generally, performance of such a source multiplexer is insufficient due to low mobility ( <1 cm2/v/s ) and degradation of the a-Si TFTs in the multiplexer circuit (shift of the switching threshold voltage under voltage stress ).

It is an object of the invention to provide a novel architecture for the display area of a display, which allows the usage of a relatively simple source driver with a limited number of outputs.

The object of the present invention is achieved by a display according to the independent Claim 1. Further advantageous embodiments are specified in the dependent Claims. According to the invention, the pixel matrix includes a first and second sub-matrix each having its own corresponding gate driver. However, the sub-matrices share a common source driver.

The first sub-matrix and the second sub-matrix are formed on a common substrate. The first sub-matrix and the second sub-matrix are positioned adjacent to each other and together constitute the active display area of the display.

Each sub-matrix has a corresponding gate driver, preferably a 'gate on glass' (GOG) type driver manufactured in a-Si circuitry on the common substrate. The sub-matrices share a common source driver for providing data signals to the column lines.

The sub-matrices share a common source driver. In addressing the display, the first and second sub-matrices are subsequently selected. Therefore, preferably, rows of pixels in the first sub-matrix are selected by the first gate driver, and rows of pixels in the second sub-matrix are selected by the second gate driver.

Each source line in the first set is interconnected with a source line in the second set. Therefore, according to the invention, a source multiplexer is not required. In the display according to the invention, the source multiplexer's function of distributing a source driver output over a plurality of source lines is taken over by the two gate drivers each selecting a corresponding sub-matrix of pixels. When the first gate driver is active, pixels in the first sub-matrix are selected and the outputs of the source driver charge their corresponding pixel capacitances. Similarly, when the second gate driver is active, pixels in the second sub-matrix are addressed.

Preferably, a conductive trace continuously extends from said output of the source driver via said source line in the first set to said corresponding source line in the second set. This reduces the number of electrical connections as well as power consumption.

In a preferred embodiment thereof, the source lines of the first set and the second set are interconnected in reverse order. That is, supposing the pixel columns of the first sub-matrix are numbered 1 ... n, and the pixel columns of the second sub-matrix are numbered n+1 ... 2n, source line 1 is interconnected with source line 2n, source line 2 is interconnected with source line 2n-1, and so forth. Thus, in the above example, source line n is interconnected with source line n+1.

Alternatively, a branching conductive trace may be used, similar to conventional displays with a source multiplexer, where one branch leads from the output to the source line in the first set and the other branch leads from the output to the source line in the second set.

The source driver may be an IC bonded to the common substrate by means of a chip-on-glass (COG) technique, or may be an external driver IC connected to the source lines via a flexible foil and a suitable connector.

Conventionally, flat panel displays are scanned along the column direction, that is one row of pixels is selected and updated at a time. In the display according to the present invention, this would mean that first all rows of one display half (for example the left half) are addressed, and than all rows of the other (right) display half. Because of this, display scanning along the row direction may be advantageous in the present invention.

The gate drivers are preferably located at opposite sides of the pixel matrix, this means that, in the above example, the first gate driver is closest to column 1, and the second gate driver is closest to column 2n. Thus, on average, the distance from any gate driver to a pixel formed on the substrate is reduced. As a result, deteriorations in the display quality due to clock skew are avoided, especially in larger displays.

A display according to the invention is preferably applied in a portable electronic device, such as a mobile phone or PDA. However, other applications may be envisaged, such as LCDs for laptop computers or televisions, or LCD panels for projection displays.

It should be noted that the use of multiple sub-matrices each having its own corresponding gate driver is known per se from US patent 6,624,865. However, according to that patent, each sub-matrix also has its own corresponding data supply unit, so that corresponding source lines in different sub-matrices are not connected to the same output of a common source driver. This is contrary to the present invention.

Aspects of the present inventions will become apparent from and will be elucidated with respect to the embodiments described hereinafter with reference to the accompanying drawings. The drawings illustrate the embodiments of the invention and together with the description, serve to explain the principles of the invention. In the drawings:
Fig. 1 shows a display in accordance with the present invention.
Fig. 2 shows a schematic representation of the output waveforms of the gate drivers and the source driver in accordance with the present invention.
In the figures, similar reference signs reference components with the same function.

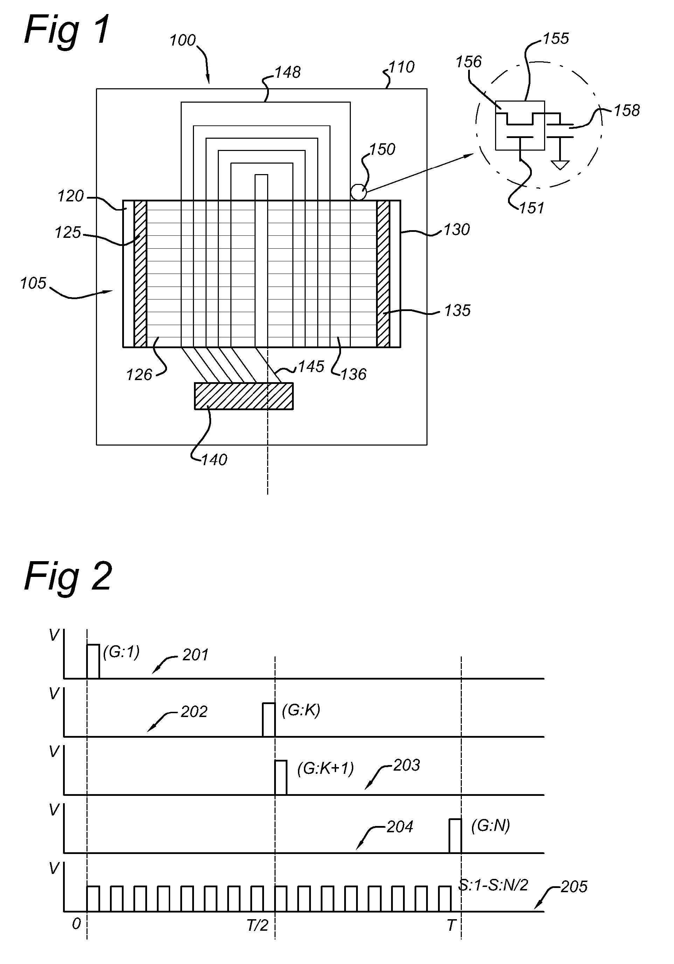

Fig. 1 shows a schematic representation of a display 100 in accordance with the present invention. The display 100 can be used in portable electronic devices, or for example in laptop computers, projection televisions, high definition televisions, and the likes. A portable electronic device includes the display 100 comprising a common substrate 110, a controller for controlling operations of the display 100 and other components such as a keypad.

Most commercially available AMLCDs use a glass common substrate, because glass has excellent optical clarity and is compatible with chemicals used in standard semiconductor processing. However, glass has the undesirable characteristic of being fragile. As a result, such displays 100 must be handled carefully. Therefore, polymers, for example plastics, are also sometimes employed as the starting material for fabrication of such displays 100. This has the advantage that the display 100 is not only lightweight and rugged but also flexible.

The common substrate comprises a display area 105. The display area 105 further comprises a first sub-matrix 120 and a second sub-matrix 130 that are disposed on the common substrate 110, and are positioned adjacent to each other. In a certain implementation the first and second display sub-panels 120, 130 may be of equal dimension. In certain other implementations, the first display sub-panel 120 and second display sub-panels 130 may have varied dimensions, but are however connected via a set of conductive traces 145. The display sub-panels 120, 130 may be reflective or transmissive types or a combination of the two. It should also be apparent here that a skilled person might use other types of combinations as well.

It should be noted that the substrate 110 is substantially rectangular in shape, however the skilled person easily recognizes that other shapes are possible as well. Preferably, an active display region or a display area 105 is centrally located within the substrate 110. A source driver 140 is disposed on one side of the rectangular substrate 110, each output is connected to a conductive trace 145. A first gate driver 125 and a second gate driver 135 are disposed on either side of the display area 105. The first gate driver is electrically connected to a first set of gate lines 126 of the first sub-matrix 120, and the second gate driver 135 is connected to a second set of gate lines 136 of the second sub-matrix 130.

The present display 100, therefore, comprises two gate drivers 125, 135 disposed on each of the first and second display sub-panels 120, 130 separately and a single common source driver 140, which are arranged to address the display 100.

A set of conductive traces 145 extends from the source driver 140 via the first sub-matrix 120 into the second sub-matrix 130. Said conductive traces 145 have different portions, namely a first set of source lines 146 in the first sub-matrix 120, a second set of source lines 147 in the second sub-matrix 130, and an interconnecting portion 148. Source lines in the first set 146 and second set 147 are preferably connected in reversed order, as has been set out earlier in this document. In this configuration, the gate drivers 125, 135 can be at opposite edges of the display area 105 so as to obtain the additional advantage of reduced gate line length.

A timing generator circuit, not shown in the figure, controls the operation of the gate drivers 125, 135 and the source driver 140. For example the timing generator comprises an LCD drive-level generator circuit, graphics RAM, and a step-up circuit. In a certain implementation dual-output (positive and negative) gate drivers 125, 135 can be used.

The gate lines 126, 136 cross the conductive traces 145 at the location of display pixels. Each pixel includes a thin film transistor (TFT) 155 formed on the common substrate 110. The source 156 of each TFT 155 connected to one of the conductive traces 145 and the gate 157 of each TFT 155 connects to a gate line 126, 136. When the TFT is switched on via the gate 157, a data voltage passes from the source 156 via the drain of the TFT to a pixel electrode, which charges a pixel capacitance 158. As a result, the pixel will take on an optical state corresponding to said data voltage.

The performance of the TFT LCD is related to various design parameters of the unit pixel 150, for example the channel width and the channel length of the TFT 155, the overlap between TFT electrodes, the sizes of the storage capacitor C_{S}, the pixel electrode 158, and the space between these elements. The design parameters associated with the matrix, the gate lines 126, 136, the conductive traces 145 and the routing of the gate lines 126, 136 and source lines 145 also set very important performance limits on the display.

In a TFT LCD unit pixel 150, the liquid crystal layer on the ITO pixel electrode forms a capacitor whose counter electrode is a common electrode formed on the substrate 110. The pixel capacitance 158 as depicted in inset Fig. 1 is a combination of the capacitance of the liquid crystal material itself and a storage capacitance Cₛ, which is connected in parallel to the liquid crystal capacitor. The storage capacitor Cₛ is used to increase the total pixel capacitance, because a large value of the pixel capacitance results in better optical performance due to the reduced cross talk from the adjacent lines. A further advantage is that the TFT leakage in the OFF state is minimized.

The gate driver 125 generates a gate selection pulse for each of the first set of gate lines 126 and the gate driver 135 generates a gate selection pulse for each of the second set of gate lines 136. The gate drivers 125, 133 are formed using an a-Si-H process on the common substrate. The external source driver 140 has common source lines connecting the first sub-matrix 120 and the second sub-matrix 130, therefore the number of source driver outputs is reduced by half. As a result, the external source driver 140 can be reduced in size and cheaper to manufacture.

Fig. 2 shows a schematic representation of the output waveforms of the gate drivers and the source driver in accordance with the present invention. The x-axis represents time and the y-axis for example represent the voltage pulse. The gate driver 125 of the first sub-matrix 120 has K gate lines labeled as G:1 to G:K for simplicity and the second gate driver 135 of the second sub-matrix also has K gate lines, labeled as G:K+1 to G:N for simplicity. Supposing an NxM pixel matrix, the source driver has M/2 external connections. Preferably, the sub-matrices are equally sized so that K=N/2.

At time t = 0, the first gate line (G:1) of the gate driver receives a pulse as shown in 201, as time progresses, at a time interval of t = T/2, the last gate line (G:K) of the gate driver receives the pulse as shown in 202. Here, T is a frame time of the display, thus if the display is for example driven at 50Hz frequency, T=1/50 seconds. After the first interval, the first gate line (G:K+1) of the second gate driver receive the pulse as shown in 203 and at t = T, the last gate line (G:N) of the second gate driver receives the pulse as shown in 204. An output of the external source driver continuously provides data pulses throughout the frame time as shown in 205. During the first half of the frame time, these data pulses address pixels in the first sub-matrix 120, and in the second half of the frame time, these data pulses address pixels in the second sub-matrix 130.

Although the invention has been elucidated with reference to the embodiments described above, it will be evident that other embodiments may be alternatively used to achieve the same object. For example, the circuitry on the active substrate, including the pixel matrix and gate drivers, can be manufactured in low temperature polysilicon (LTPS) technology rather than a-Si. The scope of the invention is not limited to the embodiments described above, which serve to illustrate rather than limit the invention. Those skilled in the art will be able to design alternative embodiments without departing from the scope of the appended claims.

The invention may be summarized as follows:

A display comprising a display area where the pixels are arranged in a first sub-matrix and a second sub-matrix positioned adjacent to each other. The sub-matrices have respective individual gate drivers and a common source driver. Each column of pixels in the first sub-matrix is interconnected with a corresponding column ofpixels in the second sub-matrix, and the source lines share a single date output of the common source driver.

## Claims

1. An active matrix display device (100) comprising a common substrate (110) having a matrix of pixels, said matrix comprising a first sub-matrix (120) and a second sub-matrix (130) positioned adjacent to each other,
wherein a first set of gate lines (126) connecting rows of pixels in the first sub-matrix (120) is connected to a first gate driver (125) and a second set of gate lines (1356) connecting rows of pixels in the second sub-matrix (130) is connected to a second gate driver (135),
and wherein a first set of source lines (146) connecting columns of pixels in the first sub-matrix (120) and a second set of source lines (147) connecting columns of pixels in the second sub-matrix (130) are connected to a common source driver (140), each source line in the first set being interconnected with a corresponding source line in the second set,
said source line in the first set and said corresponding source line in the second set being connected to the same data output of the common source driver (140).

2. The display device of Claim 1, wherein a conductive trace (145) continuously extends from said output of the source driver (140) via said source line in the first set (146) to said corresponding source line in the second set (147).

3. The display device of Claim 2, wherein the source lines of the first set and the second set are interconnected in reverse order.

4. The display device of Claim 1, wherein the first and second gate drivers are provided at opposite sides of the pixel matrix.

5. A portable electronic device comprising a display device (100) as claimed in any of the preceding Claims.
